# EUROPEAN PATENT SPECIFICATION

(11) **EP 1 457 872 B1**
(45) Date of publication and mention of the grant of the patent: **06.12.2017**
(21) Application number: 04013996.6
(22) Date of filing: 17.04.2001
(51) Int. Cl.: G06F 3/12, G06T 11/60, G06F 17/21, G06T 15/00

(54) **Digital document processing**
Digitale Dokumentverarbeitung
Traitement de documents numériques

(30) Priority: 14.04.2000 GB 0009129; 31.10.2000 US 703502
(43) Date of publication of application: 15.09.2004
(62) Divisional of application: 01921577.1
(73) Proprietor: Samsung Electronics Co., Ltd., Suwon-si, Gyeonggi-do, 443-742 (KR)
(72) Inventor: Anwar, Majid, Kings Inch Road Glasgow G51 4BP (GB)
(74) Representative: Grünecker Patent- und Rechtsanwälte PartG mbB

(56) References cited:
- US-A- 6 038 561
- Anonymous: "Visual-XML from Bluestone Software, Inc.", , 1 January 1999 (1999-01-01), XP055233213, Retrieved from the Internet: URL:http://courses.cs.tamu.edu/yurttas/cps c438/CN/02/01/xmlbh2/BLUE/XwingML.html [retrieved on 2015-12-03]

## Description

### Field of the Invention

The invention relates to data processing systems. More particularly, the invention relates to methods and systems for processing "digital documents" (as defined herein) and to devices incorporating such methods and systems. In general terms, the invention is concerned with generating an output representation of a source document; e.g. as a visual display or as hardcopy.

### Background to the Invention

As used herein, the term "digital document" is used to describe a digital representation of any type of data processed by a data processing system which is intended, ultimately, to be output in some form, in whole or in part, to a human user, typically by being displayed or reproduced visually (e.g. by means of a visual display unit or printer), or by text-to-speech conversion, etc. A digital document may include any features capable of representation, including but not limited to the following: text; graphical images; animated graphical images; full motion video images; interactive icons, buttons, menus or hyperlinks. A digital document may also include non-visual elements such as audio (sound) elements.

Data processing systems, such as personal computer systems, are typically required to process "digital documents", which may originate from any one of a number of local or remote sources and which may exist in any one of a wide variety of data formats ("file formats"). In order to generate an output version of the document, whether as a visual display or printed copy, for example, it is necessary for the computer system to interpret the original data file and to generate an output compatible with the relevant output device (e.g. monitor, or other visual display device, or printer). In general, this process will involve an application program adapted to interpret the data file, the operating system of the computer, a software "driver" specific to the desired output device and, in some cases (particularly for monitors or other visual display units), additional hardware in the form of an expansion card.

This conventional approach to the processing of digital documents in order to generate an output is inefficient in terms of hardware resources, software overheads and processing time, and is completely unsuitable for low power, portable data processing systems, including wireless telecommunication systems, or for low cost data processing systems such as network terminals, etc. Other problems are encountered in conventional digital document processing systems, including the need to configure multiple system components (including both hardware and software components) to interact in the desired manner, and inconsistencies in the processing of identical source material by different systems (e.g. differences in formatting, colour reproduction, etc). In addition, the conventional approach to digital document processing is unable to exploit the commonality and/or re-usability of file format components.

WO 97/34240 discloses a compact tree representation used during the electronic storage, transmission and presentation of a structured hypermedia document in a networked computer. All text portions of the documents are pre-processed by a document parser and the resulting document structure is stored in compact and compressed form in a persistent object storage while the document content is available in a compressed and indexable form consistent with full text retrieval systems. During document delivery, the compact representation of the document is retrieved from the persistent object storage and transferred to a client computer that constructs the document and presents it to a user.

Anonymous: "Visual-XML from Bluestone Software, Inc.", 1 January 1999, XP05523313, Retrieved from the Internet:
URL:http://courses.cs.tamu.edu/yurttas/cpsc438/CN/02/01/xmlbh2/BLUE/XwingML.html [retrieved on 2015-12-03] discusses a platform for merging XML and Java code and discloses that users are enabled to build XML documents that define the complete Java Swing Graphical User Interface and sample templates for a wide variety of GUI interfaces.

### Summary of the invention

It is therefore the object of the present invention to provide an improved data processing system that comprises a digital document processing system for generating interactive visual displays including interactive features providing a graphical user interface.

This object is solved by the subject matter of claim 1.

Preferred embodiments are defined by the dependent claims.

The systems and methods described herein include systems that employ an adaptable front end for determining a file-type to associate with the output from a source application and for processing the output, as a function of the file type, to generate a display list that is representative of objects and shapes that represent components within the visual representation of the data. The display list is then processed by a rendering engine, which optionally may be located on an embedded device.
The rendering engine processes the components contained within the display list to render an image of the source application's output that may be presented on the display of the device. As will be described below, the adaptable front end determines the file structure of the source being processed, thereby providing a device that may operate with a plurality of different file types and source applications.

Additionally and optionally, the rendering engines described herein will provide for progressive rendering of images on the display of the device. This provides a visual display interface that will render images more quickly by having finer features within the representation appear subsequent to the more easily rendered features within the presentation. Additionally, as the system described herein may break a document down into component objects, each of the objects may be processed separately including processing objects with special effects, such as shading, colouring and transparency, thereby providing a layered look to images presented by the system described herein.

In a first aspect, the systems and methods described herein relate to a digital document processing system comprising:
a mechanism for receiving an input bytestream representing source data in one of a plurality of predetermined data formats;
an interpreting mechanism for interpreting said bytestream;
a converting mechanism for converting interpreted content from said bytestream into an internal representation data format;
a processing mechanism for processing said internal representation data so as to generate output representation data adapted to drive an output device.

In a second aspect, the invention relates to a graphical user interface for a data processing system in which interactive visual displays employed by the user interface are generated by means of a digital document processing system in accordance with the first aspect of the invention and to data processing systems incorporating such a graphical user interface.

In further aspects, the invention relates to various types of device incorporating a digital document processing system in accordance with the first aspect of the invention, including hardware devices, data processing systems and peripheral devices.

In still another aspect, the invention relates to a graphical user interface for a data processing system, having one or more of a number of novel and/or enhanced features, and to data processing systems incorporating such a graphical user interface.

Embodiments of the invention will now be described, by way of example only, with reference to the accompanying drawing.

### Brief Description of the Drawing

The foregoing and other objects and advantages of the invention will be appreciated more fully from the following further description thereof, with reference to the accompanying drawings, wherein:
Fig. 1 is a functional block diagram illustrating an embodiment of a digital document processing system in accordance with the present invention;
Fig. 2 is a functional block diagram that shows the system of the invention in more detail; and
Fig. 3 is a functional block diagram further illustrating an embodiment of a digital document processing system in accordance with the present invention.

### Detailed Description of the Preferred Embodiments

The systems and methods described herein will now be described with reference to several illustrative applications and embodiments, including embodiments that are well suited for identifying a file type associated with a source application's output, such as a document produced by a word processing application, to generate a representation of the visual display of that output, wherein the representation is presented in an abstract form that may be rendered by a rendering engine adapted for a particular platform, such as a hand-held device. However, the systems and methods described herein are merely illustrative of certain embodiments of the invention, and are not to be understood as limiting in any way.

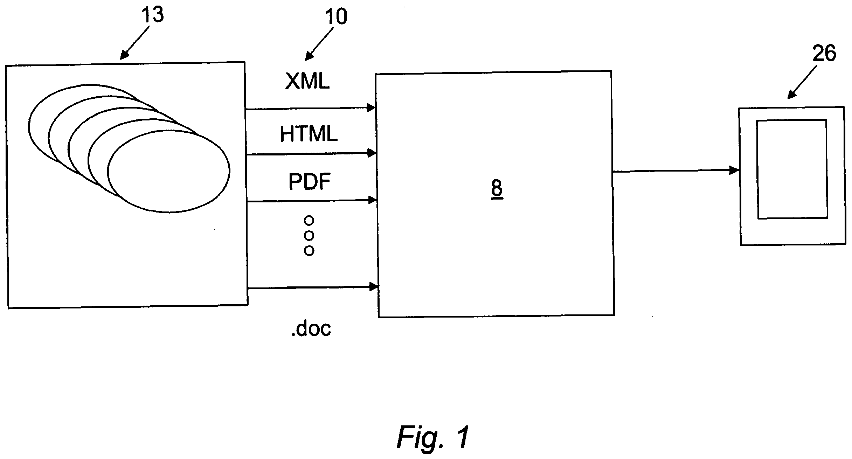

Turning now to Fig. 1, one system 8 according to the invention is depicted. Specifically, Fig. 1 depicts the system 8, a data processor 13 having a plurality of executing processes, a plurality of output source streams 10 and an output display 26. The data processor 13 can be any suitable data processing platform including a conventional data processing platform, such as a PC workstation or a server. The processes executing on the data processor may be any application that produces an output source that is to be, or may be, rendered on a display. For example, the depicted processes may include word processing programs that generate doc files, which may be presented as pages on a visual display. Similarly, the processes 13 may include a web server that delivers HTML, XML, streaming multi-media, or PDF files for display by a browser. The depicted output target device 26 may be any suitable device that can act as a display for the source being delivered by the processes.

Accordingly, Fig. 1 depicts that the system 8 of the invention can couple to output sources of a plurality of different applications, as well as output sources that differ in format. The system 8 can identify the format of each source and process the source as a function of its format. The processed source can be presented in a format suitable for presentation on the display of the target device 26.

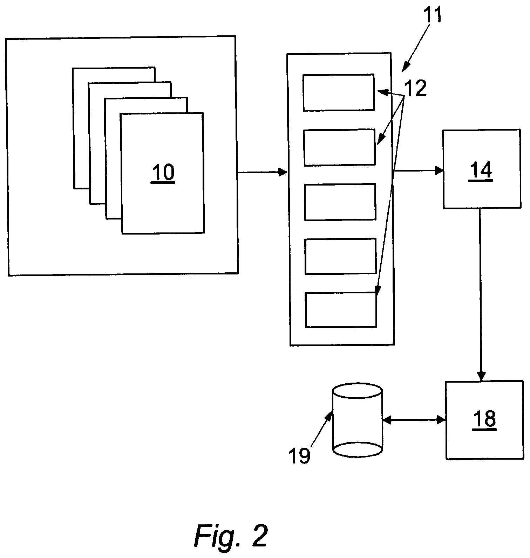

Fig. 2 depicts in more detail the system 8 of Fig. 1. Specifically, Fig. 2 depicts a plurality of application sources 10, the system 8 that includes an input module 11, or front end, a plurality of document agent processes 12, a display list 14 representative of an internal representation of the visual image that is associated with the application source 10 being processed, a rendering module 18 and a library of generic object types 19.

The adaptive front end 11 includes a plurality of document agents 12. Each document agent 12 can be a software or hardware module that is capable of receiving a stream, such as a Unix stream or a Java stream, that is associated with an application source 10. The document agent 12 can sort through the stream to determine whether the agent 12 recognises the format of that stream. If the format is recognised as belonging to that agent 12, the agent 12 can begin processing fully the input stream. The processing of an output source can include parsing the source to identify tokens within the source representative of the image that is to be displayed. These tokens can include test, fonts, bitmaps and other such identifiers.

In the depicted embodiment, the front end 11 includes a plurality of different document agents, each being associated with a different format output source. By providing a plurality of document agents and by allowing each document agent 12 to examine the output source that is to be processed, the system of Fig. 2 is a pluripotent processing engine that can display the output source of multiple files.

As the document agent 12 processes the output stream, the agent 12 builds a new data file, the display list 14, that encodes the visual image represented by the output source. The display list 14 comprises an internal representation of the visual image. The display list 14 can be passed to the rendering engine 18, which will process the information within the display list to create the visual image on the target output device 26. To this end, the document agent 12 builds the internal representation of the visual image, by creating a file that includes a set of pointers to a library of known object types. When the rendering engine 18 operates, the library 19 of known object types is referenced and the objects retrieved from the library 19 for display on the target output device 26.

Although Figs. 1 and 2 graphically depict the system 8 as comprising functional block elements, it will be apparent to one of ordinary skill in the art that these elements can be realised as computer programs or portions of computer programs that are capable of running on a data processor platform, such as the target device 26, to thereby configure the data processor as a system according to the invention. These programs can be realised as software components operating on a conventional data processing system such as a Unix workstation, can be implemented as a C language computer program, or a computer program written in any high level language including C++, Fortran, Java or Basic.
Additionally, in an embodiment where microcontrollers or DSPs are employed, the systems described herein can be realised as a computer program written in microcode or written in a high level language and compiled down to microcode that can be executed on the platform employed.

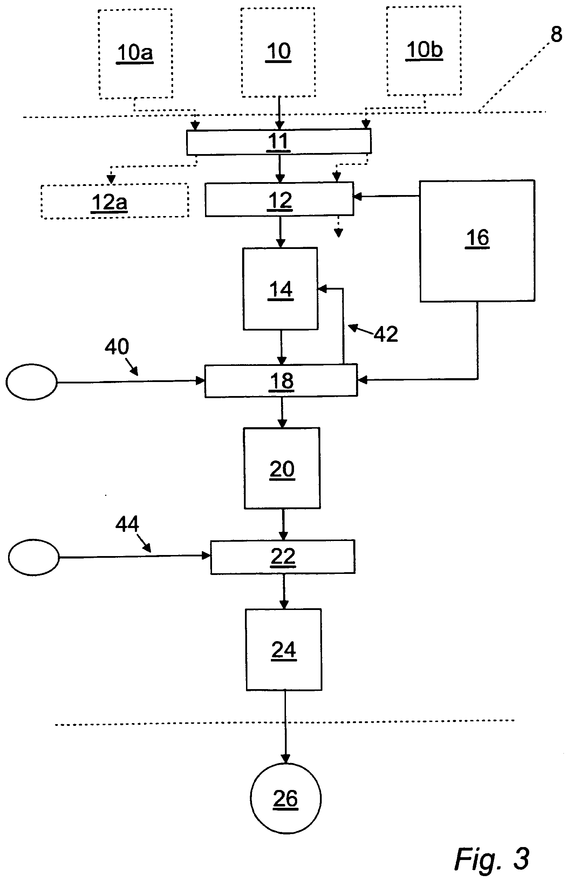

Referring now to Fig. 3 of the the drawings, a digital document processing system 8 embodying the invention, and its method of operation, is illustrated in more detail.

In general terms, the system 8 will process a source document 10 comprising a data file in a known format. The input to the system 8 is a bytestream comprising the content of the source document. An input module 11 identifies the file format of the source document on the basis of any one of a variety of criteria, such as an explicit file-type identification within the document, from the file name (particularly the file name extension), or from known characteristics of the content of particular file types. The bytestream is input to a "document agent" 12, specific to the file format of the source document. The document agent 12 is adapted to interpret the incoming bytestream and to convert it into a standard format employed by the system 8, resulting in an internal representation 14 of the source data in a "native" format suitable for processing by the system 8. The system 8 will generally include a plurality of different document agents 12, each adapted to process one of a corresponding plurality of predetermined file formats.

The system 8 may also be applied to input received from an input device such as a digital camera or scanner. In this case the input bytestream may originate directly from the input device, rather from a "source document" as such. However, the input bytestream will still be in a predictable data format suitable for processing by the system and, for the purposes of the invention, input received from such an input device may be regarded as a "source document".

The document agent 12 employs a library 16 of standard objects to generate the internal representation 14, which describes the content of the source document in terms of a collection of generic objects whose types are as defined in the library 16, together with parameters defining the properties of specific instances of the various generic objects within the document. It will be understood that the internal representation may be saved/stored in a file format native to the system and that the range of possible source documents 10 input to the system 8 may include documents in the system's native file format. It is also possible for the internal representation 14 to be converted into any of a range of other file formats if required, using suitable conversion agents (not shown).

The generic objects employed in the internal representation 14 will typically include: text, bitmap graphics and vector graphics (which may or may not be animated and which may be two- or three-dimensional), video, audio, and a variety of types of interactive object such as buttons and icons. The parameters defining specific instances of generic objects will generally include dimensional co-ordinates defining the physical shape, size and location of the object and any relevant temporal data for defining objects whose properties vary with time (allowing the system to deal with dynamic document structures and/or display functions). For text objects, the parameters will normally also include a font and size to be applied to a character string. Object parameters may also define other properties, such as transparency.

The format of the internal representation 14 separates the "structure" (or "layout") of the documents, as described by the object types and their parameters, from the "content" of the various objects; e.g. the character string (content) of a text object is separated from the dimensional parameters of the object; the image data (content) of a graphic object is separated from its dimensional parameters. This allows document structures to be defined in a very compact manner and provides the option for content data to be stored remotely and to be fetched by the system only when needed.

The internal representation 14 describes the document and its constituent objects in terms of "high-level" descriptions.

The internal representation data 14 is input to a parsing and rendering module 18 which generates a context-specific representation 20 or "view" of the document represented by the internal representation 14. The required view may be of the whole document or of part(s) (subset(s)) thereof. The parser/renderer 18 receives view control inputs 40 which define the viewing context and any related temporal parameters of the specific document view which is to be generated. For example, the system may be required to generate a zoomed view of part of a document, and then to pan or scroll the zoomed view to display adjacent portions of the document. The view control inputs 40 are interpreted by the parser/renderer 18 in order to determine which parts of the internal representation are required for a particular view and how, when and for how long the view is to be displayed.

The context-specific representation/view 20 is expressed in terms of primitive shapes and parameters.

The parser/renderer 18 may also perform additional pre-processing functions on the relevant parts of the internal representation 14 when generating the required view 20 of the source document 10. The view representation 20 is input to a shape processor module 22 for final processing to generate a final output 24, in a format suitable for driving an output device 26 (or multiple output devices), such as a display device or printer.

The pre-processing functions of the parser/renderer 18 may include colour correction, resolution adjustment/enhancement and anti-aliasing. Resolution enhancement may comprise scaling functions which preserve the legibility of the content of objects when displayed or reproduced by the target output device. Resolution adjustment may be context-sensitive; e.g. the display resolution of particular objects may be reduced while the displayed document view is being panned or scrolled and increased when the document view is static.

There may be a feedback path 42 between the renderer/parser 18 and the internal representation 14; e.g. for the purpose of triggering an update of the content of the internal representation 14, such as in the case where the document 10 represented by the internal representation comprises a multi-frame animation.

The output representation 20 from the parser/renderer 18 expresses the document in terms of "primitive" objects. For each document object, the representation 20 preferably defines the object at least in terms of a physical, rectangular boundary box, the actual shape of the object bounded by the boundary box, the data content of the object, and its transparency.

The shape processor 22 interprets the representation 20 and converts it into an output frame format 24 appropriate to the target output device 26; e.g. a dot-map for a printer, vector instruction set for a plotter, or bitmap for a display device. An output control input 44 to the shape processor 22 defines the necessary parameters for the shape processor 22 to generate output 24 suitable for a particular output device 26.

The shape processor 22 preferably processes the objects defined by the view representation 20 in terms of "shape" (i.e. the outline shape of the object), "fill" (the data content of the object) and "alpha" (the transparency of the object), performs scaling and clipping appropriate to the required view and output device, and expresses the object in terms appropriate to the output device (typically in terms of pixels by scan conversion or the like, for most types of display device or printer).

The shape processor 22 preferably includes an edge buffer which defines the shape of an object in terms of scan-converted pixels, and preferably applies anti-aliasing to the outline shape. Anti-aliasing is preferably performed in a manner determined by the characteristics of the output device 26 (i.e. on the basis of the control input 44), by applying a grey-scale ramp across the object boundary. This approach enables memory efficient shape-clipping and shape-intersection processes.

A look-up table may be employed to define multiple tone response curves, allowing non-linear rendering control (gamma correction).

The individual objects processed by the shape processor 22 are combined in the composite output frame 24. The quality of the final output can also be controlled by the user via the output control input 44.

The shape processor 22 has a multi-stage pipeline architecture which lends itself to parallel processing of multiple objects, or of multiple documents, or of multiple subsets of one or more document, by using multiple instances of the shape processor pipeline. The pipeline architecture is also easily modified to include additional processing functions (e.g. filter functions) if required. Outputs from multiple shape processors 22 may generate multiple output frames 24 or may be combined in a single output frame 24.

The system architecture is modular in nature. This enables, for example, further document agents to be added as and when required, to deal with additional source file formats. The modular architecture also allows individual modules such as the library 16, parser/renderer 18 or shape processor 22 to be modified or upgraded without requiring changes to other modules.

The system architecture as a whole also lends itself to parallelism in whole or in part for simultaneous processing of multiple input documents 10a, 10b etc. or subsets of documents, in one or more file formats, via one or more document agents 12, 12a. The integrated, modular nature of the system allows multiple instances of system modules to be spawned within a data processing system or device as and when required, limited only by available processing and memory resources.

The potential for flexible parallelism provided by the system as a whole and the shape processor 22 in particular allows the display path for a given device to be optimised for available bandwidth and memory. Display updates and animations may be improved, being quicker and requiring less memory. The object/parameter document model employed is deterministic and consistent. The system is fully scalable and allows multiple instances of the system across multiple CPUs.

The parser/renderer 18 and shape processor 22 interact dynamically in response to view control inputs 40, in a manner which optimises the use of available memory and bandwidth. This applies particularly to re-draw functions when driving a visual display, e.g. when the display is being scrolled or panned by a user.

Firstly, the system preferably implements a scalable deferred re-draw model, such that the display resolution of a document view, or of one or more objects within a view, varies dynamically according to the manner in which the display is to be modified. As previously mentioned, this might typically involve an object being displayed at reduced resolution whilst being moved on-screen and being displayed at full resolution when at rest. The system may employ multiple levels of display quality for this purpose. Typically, this will involve pre-built, low resolution bitmap representations of document objects and/or dynamically built and scaled bitmaps, with or without interpolation. This approach provides a highly responsive display which makes best use of available memory/bandwidth.

The interaction of the renderer/parser 18 and shape processor 22 preferably also involves dividing the page to be viewed into zones. Each zone has associated with it a list of all objects contained within or overlapping that zone. Re-draws can then be processed on the basis of the zones, so that the system need only process objects associated with the relevant zones affected by the re-draw. This approach facilitates parallel processing and improves efficiency and reduces redundancy. The use of zones also facilitates the use of the system to generate different outputs for different display devices (e.g. for generating a composite/mosaic output for display by an array of separate display screens).

The ability to process transparent objects is a significant feature of the system. However, this necessitates the use of off-screen buffering in the shape processor 22 in order to assemble a final output frame. Typically, an off-screen buffer will cover an area larger than the immediate display area, allowing a limited degree of panning/scrolling within the buffer area, but the entire buffer has to be re-centred and re-built when the required display moves outwith these limits. Preferably, the system improves the efficiency of such buffering processes by defining the buffer content as an array of tiles, indexed in an ordered list. When the required display view moves outwith the buffer area, it is then only necessary to discard those tiles which are no longer required, build new tiles to cover the new area of the display and update the tile list. This is faster and more efficient than conventional buffering processes and facilitates the use of multiple buffering and off-screen caching. It also facilitates interruptable re-draw functions (e.g. so that a current re-draw may be interrupted and a new re-draw initiated in response to user input).

The zoning and tiling schemes described above are independent in principle but may be combined advantageously; i.e. zones may correlate with one or more tiles. Again this facilitates parallelism and optimises use of system resources.

The system preferably employs a device-independent colour model, suitably a luminance/chrominance model such as the CIE L*a*b* 1976 model. This reduces redundancy in graphic objects, improves data compressibility and improves consistency of colour output between different output devices. Device-dependent colour correction can be applied on the basis of the device-dependent control input 44 to the shape processor 22.

Fig. 2 shows the system having an input end at which the source bytestream is received and an output end where the final output frame 24 is output from the system. However, it will be understood that the system may include intermediate inputs and outputs at other intermediate stages, such as for fetching data content or for saving/converting data generated in the course of the process.

The system 8 may be incorporated into a variety of types of data processing systems and devices, and into peripheral devices, in a number of different ways.

In a general purpose data processing system (the "host system"), the system of the present invention may be incorporated alongside the operating system and applications of the host system or may be incorporated fully or partially into the host operating system.

For example, the system of the present invention enables rapid display of a variety of types of data files on portable data processing devices with LCD displays without requiring the use of browsers or application programs. This class of data processing devices requires small size, low power processors for portability. Typically, this requires the use of advanced RISC-type core processors designed into ASICs (application specific integrated circuits), in order that the electronics package is as small and highly integrated as possible. This type of device also has limited random access memory and typically has no non-volatile data store (e.g. hard disk).

Conventional operating system models, such as are employed in standard desktop computing systems (PCs), require high powered central processors and large amounts of memory in order to process digital documents and generate useful output, and are entirely unsuited for this type of data processing device. In particular, conventional systems do not provide for the processing of multiple file formats in an integrated manner. By contrast, the present invention utilises common processes and pipelines for all file formats, thereby providing a highly integrated document processing system which is extremely efficient in terms of power consumption and usage of system resources.

The system of the present invention may be integrated at the BIOS level of portable data processing devices to enable document processing and output with much lower overheads than conventional system models. Alternatively, the invention may be implemented at the lowest system level just above the transport protocol stack. For example, the system may be incorporated into a network device (card) or system, to provide in-line processing of network traffic (e.g. working at the packet level in a TCP/IP system).

In a particular device, the system of the invention is configured to operate with a predetermined set of data file formats and particular output devices; e.g. the visual display unit of the device and/or at least one type of printer.

Examples of portable data processing devices which may employ the present system include "palmtop" computers, portable digital assistants (PDAs, including tablet-type PDAs in which the primary user interface comprises a graphical display with which the user interacts directly by means of a stylus device), internet-enabled mobile telephones and other communications devices, etc.

The system may also be incorporated into low cost data processing terminals such as enhanced telephones and "thin" network client terminals (e.g. network terminals with limited local processing and storage resources), and "set-top boxes" for use in interactive/internet-enabled cable TV systems.

When integrated with the operating system of a data processing system, the system of the present invention may also form the basis of a novel graphical user interface (GUI) for the operating system (OS). Documents processed and displayed by the system may include interactive features such as menus, buttons, icons etc. which provide the user interface to the underlying functions of the operating system. By extension, a complete OS/GUI may be expressed, processed and displayed in terms of system "documents". The OS/GUI could comprise a single document with multiple "chapters".

The system enables and/or facilitates a variety of novel and/or enhanced GUI features, including, but not limited to, the following:
- The use of thumbnail images of documents for navigation purposes and for recording user activities (history); e.g. when browsing network content.
- Document interaction functions and gesture-based commands using pointing devices and/or touch-screen technology; e.g.:
   allowing document interaction by means of gestures analogous to actions used with physical documents or books, such as dragging a pointer across a page in order to turn the page ("page-flipping"), dragging a pointer to curl back the corner of a page to view underlying parts of succeeding pages ("page curl");
   allowing tool selection by dragging tools from toolbars and de-selection by dragging tools to predetermined parts of the display;
   symbolic cursor movements to indicate particular OS commands, such as "tick", "cross-out" and "circle" movements for "OK", "delete" and "select"; editing commands based on conventional "proof-readers" notation;
- Re-formatting document views by rotation or switching between landscape and portrait formats;
- Utilities and tools such as:
   a floating virtual "magnifying glass" which magnifies the underlying document area, in which the magnified view is based on the internal representation 14 of the source document rather than on a bitmap representation of the document and which may modify document parameters such as background and/or foreground colours;
   a floating virtual, translucent keyboard for text input using a pointing device/touch screen;
   a floating, virtual, translucent ruler which is re-scalable using any of a variety of user-selectable units.
- Alternative menu or "tabbed page" drag out/pull down functions.
- Simulation of physical inertia/momentum applied to page scrolling/panning functions (e.g. when a zoomed display of a page is dragged to scroll the display and released, the moving display decelerates gradually after release).

GUI features of this type provide new or enhanced functionality and/or improve the subjective quality of the user interface.

The system of the present invention may also be incorporated into peripheral devices such as hardcopy devices (printers and plotters), display devices (such as digital projectors), networking devices, input devices (cameras, scanners etc.) and also multi-function peripherals (MFPs).

When incorporated into a printer, the system enables the printer to receive raw data files from the host data processing system and to reproduce the content of the original data file correctly, without the need for particular applications or drivers provided by the host system. This avoids the need to configure a computer system to drive a particular type of printer. The present system directly generates a dot-mapped image of the source document suitable for output by the printer (this is true whether the system is incorporated into the printer itself or into the host system). Similar considerations apply to other hardcopy devices such as plotters.

When incorporated into a display device, such as a projector, the system again enables the device to display the content of the original data file correctly without the use of applications or drivers on the host system, and without the need for specific configuration of the host system and/or display device. Peripheral devices of these types, when equipped with the present system, may receive and output data files from any source, via any type of data communications network.

From the foregoing, it will be understood that the system of the present invention may be "hard-wired; e.g. implemented in ROM and/or integrated into ASICs or other single-chip systems, or may be implemented as firmware (programmable ROM such as flashable ePROM), or as software, being stored locally or remotely and being fetched and executed as required by a particular device.

## Claims

1. A data processing system comprising:
an operating system; and
a digital document processing system (8) integrated with said operating system and adapted to generate interactive visual displays including interactive features providing a graphical user interface, said digital document processing system comprising:
means (11) for receiving an input bytestream representing source data (10a, 10b, 10c), said source data defining the content of digital documents in any of a plurality of predetermined data formats, wherein one or more of said digital documents include interactive features;
interpreting means (11,12) for interpreting said bytestream;
converting means (12) for converting interpreted content from said bytestream into an internal representation data format (14);
means (18,22) for processing said internal representation data (14) so as to generate output representation data (24) adapted to drive a display device (26); wherein said internal representation data (14) describes a structure of the input bytestream in terms of generic objects defining a plurality of data types and parameters defining properties of specific instances of generic object, separately from said content; wherein:
a parsing and rendering module (18) is adapted to generate the object and parameter based representation (20) of a context-specific view of the document represented by the internal representation data (14) on the basis of a view control input (40) to said parsing and rendering module (18), in order to determine which part of the internal representation are required for a particular view,
a shape processing module (22) is adapted to receive said object and parameter based representation (20) of the context-specific view from said parsing and rendering module and to convert said object and parameter based representation (20) into an output data format (24) suitable for driving a particular output device (26),
said parsing and rendering module (18) is further adapted to define at least part of said internal representation data (14) in terms of a plurality of zones, each zone having an associated list of objects contained within and overlapping said zone, and said shape processor module (22) is further adapted to process said object and parameter based representation (20) on the basis of said zones and associated lists, and
the output representation data (24) generated from said context-specific view includes interactive features of said interactive visual displays so as to provide said graphical user interface.

2. A system as claimed in claim 1, wherein said interactive features provide a graphical user interface to underlying operating system functions.

3. A system as claimed in claim 1 or claim 2, wherein said interactive features include at least one of a menu, a button an icon and a hyperlink.

4. A system as claimed in any preceding claim, wherein:
said means (11) for receiving an input bytestream comprises an input module (11) and said bytestream contains information representative of a visual image;
said interpreting means and converting means (12) generates said internal representation of said visual image; and
said means (18,22) for processing the internal representation comprises a rendering engine for generating an output data stream suitable for driving said display device (26) to present the visual image.

5. A system as claimed in claim 4, wherein said means for receiving said input bytestream includes a process for monitoring a data stream and for identifying files in any of the formats from the set consisting of HTML, XML, PDF, and DOC.

6. A system as claimed in claim 1, further including a library (16) of generic object types, said internal representation data (14) being based on the content of said library.

7. A system as claimed in claim 1, wherein said shape processing module (22) processes said objects on the basis of a boundary box defining the boundary of an object, a shape defining the actual shape of the object bounded by the boundary box, the data content of the object and the transparency of the object.

8. A system as claimed in claim 7, wherein said shape processor (22) is adapted to apply grey-scale anti-aliasing to the edges of said objects.

9. A system as claimed in any one of claims 1 to 8, wherein said shape processing module (22) has a pipeline architecture.

10. A system as claimed in any one of claims 1 to 9, wherein said shape processor (22) employs at least one off-screen display buffer to generate said output data and wherein said at least one off-screen display buffer is defined by an indexed array of tiles.

11. A system as claimed in claim 10, wherein updating of the content of said at least one off-screen display buffer is performed by removing selected tiles from said array, adding new tiles to said array, and up-dating the indexing of said tiles.

12. A system as claimed in any one of claims 6 to 11, wherein said object parameters include dimensional, physical and temporal parameters.

13. A system as claimed in any preceding claim, wherein the system employs a chrominance/luminance-based colour model to describe colour data.

14. A system as claimed in any preceding claim, wherein said digital document processing system (8) is adapted for multiple parallel implementation in whole or in part for processing one or more sets of source data from one or more data sources and for generating one or more sets of output representation data.

15. A system as claimed in any preceding claim, wherein said digital document processing system (8) is integrated at the BIOS level of the system.

16. A system as claimed in any one of claims 1 to 14, wherein said digital document processing system (8) is implemented immediately above the transport protocol stack of the system.

17. A system as claimed in any one of claims 1 to 14, wherein said digital document processing system (8) is implemented in a network device.

18. A system as claimed in any one of claims 1 to 14, further including a display device, wherein said digital document processing system (8) is incorporated in said display device.

19. A data processing device incorporating a data processing system as claimed in any one of claims 1 to 14 or 18.

20. A hardware device for data processing and/or storage, said hardware device encoding a data processing system as claimed in any one of claims 1 to 14.

21. A hardware device as claimed in claim 20, further including a core processor system.

22. A hardware device as claimed in claim 21, wherein said core processor is a RISC-type processor.

23. A hardware device as claimed in claim 22, wherein said RISC-type processor is designed into an application specific integrated circuit.

24. A data processing device as claimed in claim 19, wherein said data processing device comprises a portable data processing device.

25. A data processing device as claimed in Claim 24, wherein said portable data processing device comprises a wireless telecommunications device.

26. A system as claimed in any one of Claims 1 to 14, wherein said data processing system comprises a network user-terminal.

27. A system as claimed in any one of Claims 1 to 14, wherein said data processing system comprises a set-top box.

28. A system as claimed in any one of claims 1 to 14, 26 or 27 wherein said graphical user interface includes at least one of the following features:
- the use of thumbnail images of documents for navigation purposes and for recording user activities;
- document interaction functions and gesture-based commands using pointing devices and/or touch-screen technology, including document interaction by means of gestures analogous to actions used with physical documents or books;
- tool selection by dragging tools from toolbars and de-selection by dragging tools to predetermined parts of the display;
- symbolic cursor movements to indicate commands;
- re-formatting document views by rotation or switching between landscape and portrait formats;
- alternative menu or "tabbed page" drag out/pull down functions;
- simulated physical inertia/momentum applied to page scrolling/panning functions.

29. A system as claimed in any one of claims 1 to 14 or 26 to 28, wherein said graphical user interface includes at least one of the following utilities/tools:
- a floating virtual magnifying glass adapted to magnify an underlying document area, in which the magnified view is based on source document data;
- a floating virtual, translucent keyboard for text input using a pointing device/touch screen;
- a floating, virtual, translucent ruler which is re-scalable using any of a variety of user-selectable units.

## Patentansprüche

1. Datenverarbeitungssystem mit:
einem Betriebssystem; und
einem digitalen Dokumentenverarbeitungssystem (8), das in dem Betriebssystem integriert und ausgebildet ist, interaktive visuelle Anzeigen mit interaktiven Merkmalen zu erzeugen, die eine grafische Benutzeroberfläche bereitstellen, wobei das digitale Dokumentenverarbeitungssystem umfasst:
eine Einrichtung (11) zum Empfangen eines Eingangs-Bytestroms, der Ursprungsdaten (10a, 10b, 10c) repräsentiert, wobei die Ursprungsdaten den Inhalt von digitalen Dokumenten in einem beliebigen von mehreren vorbestimmten Datenformaten definieren, wobei eines oder mehrere der digitalen Dokumente interaktive Merkmale enthält;
eine Übersetzungseinrichtung (11, 12) zum Übersetzen des Bytestroms;
eine Umwandlungseinrichtung (12) zur Umwandlung von übersetzten Inhalten aus dem Bytestrom in ein Datenformat für die interne Darstellung (14);
eine Einrichtung (18, 22) zur Verarbeitung der Daten für die interne Darstellung (14), um Ausgabedarstellungsdaten (24) zu erzeugen, die geeignet sind, eine Anzeigeeinrichtung (26) anzusteuern; wobei die Daten für die interne Darstellung (14) eine Struktur des Eingangs-Bytestroms in Bezug auf generische Objekte, die mehrere Datenarten definieren, und Parameter, die Eigenschaften spezieller Instanzen generischer Objekte definieren, separat zu dem Inhalt beschreiben; wobei:
ein Analyse- und Erzeugungsmodul (18) ausgebildet ist, die objekt- und parameterbasierte Darstellung (20) einer kontextspezifischen Ansicht des Dokumentes, das durch die Daten für die interne Darstellung (14) repräsentiert ist, auf der Grundlage einer Ansichtensteuerungseingabe (40) für das Analyse- und Erzeugungsmodul (18) zu erzeugen, um zu ermitteln, welcher Teil der internen Darstellung für eine spezielle Ansicht erforderlich ist,
ein Formenverarbeitungsmodul (22), das ausgebildet ist, die objekt- und parameterbasierte Darstellung (20) der kontextspezifischen Ansicht aus dem Analyse- und Erzeugungsmodul zu empfangen und die objekt- und parameterbasierte Darstellung (20) in ein Ausgabedatenformat (24) umzuwandeln, das zur Ansteuerung einer speziellen Ausgabeeinrichtung (26) geeignet ist,
wobei das Analyse- und Erzeugungsmodul (18) ferner ausgebildet ist, zumindest einen Teil der Daten für die interne Darstellung (14) in Form mehrerer Zonen festzulegen, wobei die Zone eine zugehörige Liste an Objekten hat, die in der Zone sind und damit überlappen, und wobei das Formenverarbeitungsmodul (22) ferner ausgebildet ist, die objekt- und parameterbasierte Darstellung (20) auf der Grundlage der Zonen und zugehörigen Listen zu verarbeiten, und
die Ausgabedarstellungsdaten (24), die aus der kontextspezifischen Ansicht erzeugt sind, interaktive Merkmale der interaktiven visuellen Anzeigen enthalten, um die grafische Benutzeroberfläche bereitzustellen.

2. System nach Anspruch 1, wobei die interaktiven Merkmale eine grafische Benutzeroberfläche für tieferliegende Funktionen des Betriebssystems bereitstellen.

3. System nach Anspruch 1 oder Anspruch 2, wobei die interaktiven Merkmale ein Menü und/oder einen Knopf und/oder ein Symbol und/oder einen Hyperlink umfassen.

4. System nach einem der vorhergehenden Ansprüche, wobei:
die Einrichtung (11) zum Empfangen eines Eingangs-Bytestroms ein Eingabemodul (11) aufweist und wobei der Bytestrom Information enthält, die für ein visuelles Bild repräsentativ ist;
die Übersetzungseinrichtung und die Umwandlungseinrichtung (12) die interne Darstellung des visuellen Bildes erzeugen; und
die Einrichtung (18, 22) zur Verarbeitung der internen Darstellung eine Bilderzeugungseinheit zur Erzeugung eines Ausgabedatenstroms aufweist, der geeignet ist, die Anzeigeeinrichtung (26) zu steuern, um das visuelle Bild darzustellen.

5. System nach Anspruch 4, wobei die Einrichtung zum Empfangen des Eingangs-Bytestroms einen Prozess zur Überwachung eines Datenstroms und zur Erkennung von Dateien in einem der Formate aufweist, das zu der Gruppe HTML, XML, PDF und DOC gehört.

6. System nach Anspruch 1, das ferner eine Bibliothek (A16) von generischen Objekttypen enthält, wobei die Daten für die interne Darstellung (14) auf dem Inhalt der Bibliothek beruhen.

7. System nach Anspruch 1, wobei das Formenverarbeitungsmodul (22) die Objekte auf der Grundlage eines Begrenzungsfeldes, das die Grenze eines Objekts festlegt, einer Form, die die tatsächliche Form des Objekts festlegt, das von den Begrenzungsfeld begrenzt ist, dem Dateninhalt des Objekts und der Transparenz des Objekts verarbeitet.

8. System nach Anspruch 7, wobei das Formenverarbeitungsmodul (22) ausgebildet ist, eine Graustufen-Bildfehlerbehebung an den Kanten des Objekts anzuwenden.

9. System nach einem der Ansprüche 1 bis 8, wobei das Formenverarbeitungsmodul (22) eine Pipeline-Architektur hat.

10. System nach einem der Ansprüche 1 bis 9, wobei das Formenverarbeitungsmodul (22) mindestens einen bildschirmexternen Anzeigespeicher verwendet, um die Ausgabedaten zu erzeugen, und wobei der mindestens eine bildschirmexterne Anzeigespeicher durch ein indiziertes Feld aus Kacheln definiert ist.

11. System nach Anspruch 10, wobei Aktualisieren des Inhalts des mindestens einen bildschirmexternen Anzeigespeichers ausgeführt wird, indem ausgewählte Kacheln aus dem Feld entfernt, neue Kacheln dem Feld hinzugefügt und die Indizierung der Kacheln aktualisiert wird.

12. System nach einem der Ansprüche 6 bis 11, wobei die Objektparameter Dimensionsparameter, physikalische und zeitliche Parameter umfassen.

13. System nach einem der vorhergehenden Ansprüche, wobei das System ein Chrominanz/Luminanz-basiertest Modell zur Beschreibung von Farbdaten verwendet.

14. System nach einem der vorhergehenden Ansprüche, wobei das digitale Dokumentenverarbeitungssystem (8) für eine mehrfache parallele Implementierung als Ganzes oder teilweise zur Verarbeitung eines oder mehrerer Sätze aus Ursprungsdaten aus einer oder mehreren Datenquellen und zur Erzeugung eines oder mehrerer Sätze aus Ausgabedarstellungsdaten ausgebildet ist.

15. System nach einem der vorhergehenden Ansprüche, wobei das digitale Dokumentenverarbeitungssystem (8) auf der BIOS-Ebene des Systems integriert ist.

16. System nach einem der Ansprüche 1 bis 14, wobei das digitale Dokumentenverarbeitungssystem (8) unmittelbar über dem Transportprotokollstapel des Systems implementiert ist.

17. System nach einem der Ansprüche 1 bis 14, wobei das digitale Dokumentenverarbeitungssystem (8) in einer Netzwerkeinrichtung implementiert ist.

18. System nach einem der Ansprüche 1 bis 14, das ferner eine Anzeigeeinrichtung aufweist, wobei das digitale Dokumentenverarbeitungssystem (8) in der Anzeigeeinrichtung enthalten ist.

19. Datenverarbeitungseinrichtung mit einem Datenverarbeitungssystem nach einem der Ansprüche 1 bis 14 oder 18.

20. Hardware-Einrichtung zur Datenverarbeitung und/oder Datenspeicherung, wobei die Hardware-Einrichtung ein Datenverarbeitungssystem nach einem der Ansprüche 1 bis 14 kodiert.

21. Hardware-Einrichtung nach Anspruch 20, die ferner ein Kernprozessorsystem aufweist.

22. Hardware-Einrichtung nach Anspruch 21, wobei der Kernprozessor ein Prozessor des RISC-Typs ist.

23. Hardware-Einrichtung nach Anspruch 22, wobei der Prozessor des RISC-Typs in Form einer anwendungsspezifischen integrierten Schaltung entworfen ist.

24. Datenverarbeitungseinrichtung nach Anspruch 19, wobei die Datenverarbeitungseinrichtung eine tragbare Datenverarbeitungseinrichtung umfasst.

25. Datenverarbeitungseinrichtung nach Anspruch 24, wobei die tragbare Datenverarbeitungseinrichtung eine Drahtlos-Telekommunikationseinrichtung umfasst.

26. System nach einem der Ansprüche 1 bis 14, wobei das Datenverarbeitungssystem ein Netzwerk-Benutzerendgerät umfasst.

27. System nach einem der Ansprüche 1 bis 14, wobei das Datenverarbeitungssystem einen Digitalempfänger umfasst.

28. System nach einem der Ansprüche 1 bis 14, 26 oder 27, wobei die grafische Benutzeroberfläche mindestens eines der folgenden Merkmale aufweist:
- die Verwendung von Vorschaubildern von Dokumenten zu Navigationszwecken und Aufzeichnung von Benutzeraktivitäten;
- Dokumenten-Interaktionsfunktionen und gestenbasierte Befehle unter Anwendung von Zeiger-Einrichtungen und/oder Technik mit berührungsempfindlichen Bildschirmen, einschließlich einer Dokumenteninteraktion mittels Gesten analog zu Aktionen, die in Verbindung mit physischen Dokumenten oder Büchern verwendet werden;
- Werkzeugauswahl durch Zieh-Werkzeuge aus Werkzeuglisten und Abwahl durch Zieh-Werkzeuge zu vorbestimmten Teilen der Anzeige;
- symbolische Zeiger-Bewegungen, um Befehle anzugeben;
- Neuformatieren von Dokumentenansichten durch Drehen oder Umschalten zwischen Querformat und Hochformat;
- Funktionen für alternatives Menü oder "tabellierte Seiten" durch Herausziehen/Herabziehen;
- simulierte(r) physikalische(r) Trägheit/Impuls, die/der auf Seiten Kroll-/Schwenk-Funktionen angewendet wird.

29. System nach einem der Ansprüche 1 bis 14 oder 26 bis 28, wobei die grafische Benutzeroberfläche mindestens eine der folgenden Eigenschaften/Werkzeuge aufweist:
- ein schwebendes virtuelles Vergrößerungsglas, das ausgebildet ist, einen darunterliegenden Dokumentenbereich zu vergrößern, wobei die vergrößerte Ansicht auf ursprünglichen Dokumentendaten beruht;
- eine schwebende virtuelle durchscheinende Tastatur für Texteingabe unter Anwendung einer Zeiger-Einrichtung/eines berührungsempfindlichen Bildschirms;
- ein schwebendes virtuelles durchscheinendes Lineal, das unter Anwendung einer Vielzahl von benutzerauswählbaren Einheiten neu skalierbar ist.

## Revendications

1. Système de traitement de données comprenant:
un système d'exploitation; et
un système de traitement de documents numériques (8) intégré audit système d'exploitation et prévu pour générer des affichages visuels interactifs comprenant des fonctions interactives fournissant une interface utilisateur graphique, ledit système de traitement de documents numériques comprenant:
des moyens (11) permettant de recevoir un flux de multiplets d'entrée représentant des données sources (10a, 10b, 10c), lesdites données source définissant le contenu de documents numériques dans un format quelconque parmi une pluralité de formats de données prédéterminés, dans lequel un ou plusieurs desdits documents numériques incluent des fonctionnalités interactives;
des moyens d'interprétation (11, 12) permettant d'interpréter ledit flux de multiplets;
des moyens de conversion (12) permettant de convertir un contenu interprété provenant dudit flux de multiplets dans un format de données de représentation interne (14);
des moyens (18, 22) permettant de traiter lesdites données de représentation interne (14) de manière à générer des données de représentation de sortie (24) prévues pour piloter un dispositif d'affichage (26);
dans lequel lesdites données de représentation interne (14) décrivent une structure du flux de multiplets d'entrée en termes d'objets génériques définissant une pluralité de types de données et de paramètres définissant des propriétés d'instances spécifiques d'objet générique, séparément dudit contenu;
dans lequel:
un module d'analyse syntaxique et de rendu (18) est prévu pour générer la représentation à base d'objets et de paramètres (20) d'une vue spécifique au contexte, du document représenté par les données de représentation interne (14) sur la base d'une entrée de commande de vue (40) pour ledit module d'analyse syntaxique et de rendu (18), afin de déterminer quelle partie de la représentation interne est requise pour une vue particulière,
un module de traitement de forme (22) est prévu pour recevoir ladite représentation à base d'objets et de paramètres (20) de la vue spécifique au contexte provenant dudit module d'analyse syntaxique et de rendu et pour convertir ladite représentation à base d'objets et de paramètres (20) dans un format de données de sortie (24) permettant de piloter un dispositif de sortie particulier (26),
ledit module d'analyse syntaxique et de rendu (18) est en outre prévu pour définir au moins une partie desdites données de représentation interne (14) en termes d'une pluralité de zones, chaque zone ayant une liste associée d'objets contenus à l'intérieur et chevauchant ladite zone, et ledit module de traitement de forme (22) est en outre prévu pour traiter ladite représentation à base d'objets et de paramètres (20) en fonction desdites zones et listes associées, et
les données de représentation de sortie (24) générées à partir de ladite vue spécifique au contexte comprennent des fonctions interactives desdits affichages visuels interactifs de façon à fournir ladite interface utilisateur graphique.

2. Système selon la revendication 1, dans lequel lesdites fonctionnalités interactives fournissent une interface utilisateur graphique aux fonctions sous-jacentes du système d'exploitation.

3. Système selon la revendication 1 ou la revendication 2, dans lequel lesdites fonctionnalités interactives incluent au moins l'un des éléments suivants : un menu, un bouton, une icône ou un lien hypertexte.

4. Système selon l'une quelconque des revendications précédentes, dans lequel:
lesdits moyens (11) permettant de recevoir un flux de multiplets d'entrée comprennent un module d'entrée (11) et ledit flux de multiplets d'entrée contient des informations représentatives d'une image visuelle;
lesdits moyens d'interprétation et moyens de conversion (12) génèrent ladite représentation interne de ladite image visuelle; et
lesdits moyens (18, 22) permettant de traitement la représentation interne comprennent un moteur de rendu permettant de générer un flux de données de sortie convenant au pilotage dudit dispositif d'affichage (26) pour présenter l'image visuelle.

5. Système selon la revendication 4, dans lequel lesdits moyens permettant de recevoir ledit flux de multiplets d'entrée comprennent un processus de surveillance d'un flux de données et d'identification de fichiers dans l'un quelconque des formats de l'ensemble composé de HTML, XML, PDF et DOC.

6. Système selon la revendication 1, comprenant en outre une bibliothèque (16) de types d'objets génériques, lesdites données de représentation interne (14) étant fondées sur le contenu de ladite bibliothèque.

7. Système selon la revendication 1, dans lequel ledit module de traitement de forme (22) traite lesdits objets sur la base d'une boîte limite définissant la limite d'un objet, d'une forme définissant la forme réelle de l'objet limité par la boîte limite, du contenu de données de l'objet et de la transparence de l'objet.

8. Système selon la revendication 2, dans lequel ledit module de traitement de forme (22) est prévu pour appliquer un anticrénelage de l'échelle de gris sur les bords desdits objets.

9. Système selon l'une selon l'une quelconque des revendications 1 à 8,
dans lequel ledit module de traitement de forme (22) possède une architecture de pipeline.

10. Système selon l'une quelconque des revendications 1 à 9,
dans lequel ledit module de traitement de forme (22) emploie au moins un tampon d'affichage hors-écran pour générer lesdites données de sortie et dans lequel ledit au moins un tampon d'affichage hors-écran est défini par une matrice indexée de carreaux.

11. Système selon la revendication 10,
dans lequel la mise à jour du contenu dudit au moins un tampon d'affichage hors-écran consiste à retirer des carreaux choisis parmi ladite matrice, à ajouter de nouveaux carreaux à ladite matrice et à mettre à jour l'indexation desdits carreaux.

12. Système selon l'une quelconque des revendications 6 à 11,
dans lequel lesdits paramètres d'objets incluent des paramètres dimensionnels, physiques et temporels.

13. Système selon l'une quelconque des revendications précédentes, dans lequel le système emploie un modèle de couleur à base de chrominance/luminance pour décrire les données de couleur.

14. Système selon l'une quelconque des revendications précédentes, dans lequel ledit système de traitement de documents numériques (8) est prévu pour une mise en oeuvre multiple parallèle, totale ou partielle, afin de traiter un ou plusieurs ensembles de données source provenant d'une ou plusieurs sources de données et ainsi générer un ou plusieurs ensembles de données de représentation de sortie.

15. Système selon l'une quelconque des revendications précédentes, dans lequel le système de traitement de documents numériques (8) est intégré au niveau BIOS du système.

16. Système selon l'une quelconque des revendications 1 à 14,
dans lequel ledit système de traitement de documents numériques (8) est mis en oeuvre immédiatement au-dessus de la pile de protocoles de transport du système.

17. Système selon l'une quelconque des revendications 1 à 14,
dans lequel le système de traitement de documents numériques (8) est mise en oeuvre dans un périphérique en réseau.

18. Système selon l'une quelconque des revendications 1 à 14,
comprenant en outre un dispositif d'affichage, dans lequel ledit système de traitement de documents numériques (8) est intégré audit dispositif d'affichage.

19. Dispositif de traitement de données intégrant un système de traitement de données selon l'une quelconque des revendications 1 à 14 ou 18.

20. Périphérique matériel pour le traitement et/ou le stockage de données, ledit périphérique matériel codant un système de traitement de données selon l'une quelconque des revendications 1 à 14.

21. Périphérique matériel selon la revendication 20,
comprenant en outre un système processeur central.

22. Périphérique matériel selon la revendication 21,
dans lequel ledit processeur central est un processeur de type RISC.

23. Périphérique matériel selon la revendication 22,
dans lequel ledit processeur de type RISC est conçu dans un circuit intégré spécifique à l'application.

24. Dispositif de traitement de données selon la revendication 19,
dans lequel ledit dispositif de traitement de données comprend un dispositif portable de traitement de données.

25. Dispositif de traitement de données selon la revendication 24,
dans lequel ledit dispositif portable de traitement de données comprend un dispositif de télécommunication sans fil.

26. Système selon l'une quelconque des revendications 1 à 14,
dans lequel ledit système de traitement de données comprend un terminal utilisateur de réseau.

27. Système selon l'une quelconque des revendications 1 à 14,
dans lequel ledit système de traitement de données comprend un boîtier décodeur.

28. Système selon l'une quelconque des revendications 1 à 14, 26 ou 27,
dans lequel ladite interface utilisateur graphique inclut au moins l'une des fonctionnalités suivantes:
- l'utilisation d'images miniatures de documents à des fins de navigation et pour enregistrer les activités des utilisateurs;
- fonctions d'interaction de document et commandes à base de gestes utilisant des dispositifs de pointage et/ou la technologie à écran tactile, y compris l'interaction de documents par des gestes analogues à des actions utilisées avec des documents physiques ou des livres;
- sélection d'outil en faisant glisser des outils à partir de barres d'outils et désélection en faisant glisser des outils vers des parties prédéterminées de l'affichage;
- mouvements symboliques du curseur pour indiquer les commandes;
- reformatage des vues de documents par rotation ou va-et-vient entre les formats paysage et portrait;
- un menu alternatif ou des fonction de sortie par glissement/par extraction de "page à onglets";
- inertie/moment physique simulé appliqués aux fonctions de défilement/de vue panoramique des pages.

29. Système selon l'une quelconque des revendications 1 à 14, 26 ou 28, dans lequel ladite interface utilisateur graphique inclut au moins l'un des utilitaires/outils:
- une loupe virtuelle flottante prévue pour agrandir une zone sous-jacente de document, dans laquelle la vue agrandie est fonde sur les données de document source;
- un clavier flottant virtuel, translucide pour saisie de texte en utilisant un dispositif de pointage/un écran tactile;
- une règle flottante, virtuelle et translucide qui peut être remise à l'échelle en utilisation un élément quelconque parmi une variété d'unités sélectionnables par l'utilisateur.
